# EUROPÄISCHE PATENTSCHRIFT

(11) **EP 3 428 619 B1**
(45) Veröffentlichungstag und Bekanntmachung des Hinweises auf die Patenterteilung: **27.11.2019**
(21) Anmeldenummer: 17180495.8
(22) Anmeldetag: 10.07.2017
(51) Int. Cl.: G01N 21/27, G01B 11/06, G01N 21/3563, G01N 21/359, G01N 21/84

(54) **VERFAHREN ZUR BESTIMMUNG DER MENGE EINER AUF EINER HOLZWERKSTOFFPLATTE AUFGETRAGENEN FLÜSSIGEN HARZSCHICHT**
METHOD FOR DETERMINING THE AMOUNT OF A LIQUID RESIN LAYER APPLIED TO A COMPOSITE WOOD BOARD
PROCÉDÉ DE DÉTERMINATION DE LA QUANTITÉ D'UNE COUCHE DE RÉSINE LIQUIDE APPLIQUÉE SUR UNE PLAQUE DE BOIS

(43) Veröffentlichungstag der Anmeldung: 16.01.2019
(73) Patentinhaber: Flooring Technologies Ltd., Kalkara SCM1001 (MT)
(72) Erfinder: DENK, Andre, 16909 Wittstock/Dosse (DE); KALWA, Norbert, 32805 Horn-Bad Meinberg (DE)
(74) Vertreter: Maikowski & Ninnemann Patentanwälte Partnerschaft mbB

(56) Entgegenhaltungen:
- EP-A1- 2 915 658
- EP-A1- 3 023 261
- EP-A1- 3 026 391
- EP-A1- 3 078 959
- US-A1- 2004 195 714
- US-B1- 8 338 787

## Beschreibung

Die vorliegende Erfindung betrifft ein Verfahren zur Bestimmung der Menge einer auf mindestens einer Holzwerkstoffplatte aufgetragenen flüssigen Harzschicht nach dem Oberbegriff des Anspruchs 1.

### Beschreibung

Holzwerkstoffplatten als Trägermaterialien werden in den verschiedensten Bereichen eingesetzt und sind weit verbreitet. So sind Holzwerkstoffplatten unter anderem aus der Verwendung als Fußbodenpaneele, zum Beispiel in Form von Laminatböden, als Dämmstoffplatten für den Innen- und Außenbereich oder auch als Wandpaneele bekannt. Derartige Werkstoffplatten werden üblicherweise aus Holzfasern oder Holzspänen hergestellt. Im Falle von Laminatböden werden zum Beispiel aus Holzfasern hergestellte HDF-Platten (HDF = Faserplatte mit erhöhter Rohdichte) mit vielfältigen Dekoren-verwendet.

Ein bekanntes Verfahren der Laminatfußbodenherstellung wird zum Beispiel in WO 2010/112125 A1 beschrieben. Bei diesem Verfahren werden hochdichte Faserplatten mit flüssigem Material in mehreren Aufträgen beschichtet. Dabei wird zunächst eine Grundierung mit Melamin-Formaldehyd-Harz (MF-Harz) erzeugt. Danach wird eine zweite Grundierung mit einer Dekorfarbe aufgetragen, die als Basis für den Dekortiefdruck dient. Anschließend wird durch mehrmaliges Auftragen des MF-Harzes, das nun verschleißhemmende Feststoffe (z.B. Korund, Glaskugeln) in der Größe zwischen 10 - 200 µm beinhaltet, eine abriebfeste Schutzschicht erzeugt. Die aufgetragene und vorgetrocknete Beschichtung wird in einer Kurztaktpresse (KT- Presse) bei einer Presstemperatur von 195-205 °C und einer Presszeit von 8 bis 9 Sekunden unter einem spezifischen Druck von 40 kg/cm² (40 bar) zur Aushärtung gebracht.

Ein weiteres Verfahren der Plattenbeschichtung wird in EP 3 023 261 A1 beschrieben. Bei diesem Verfahren wird auf Oberseite oder Unterseite der HDF-Platte eine Schicht aus flüssigem Kunstharz (zum Beispiel MF-Harz) aufgetragen. Auf die Harzschicht wird eine mit einem Kunstharz getränkte Papierlage aufgelegt. Anschließend wird dieser Aufbau in einer Presse unter hohem Druck und hoher Temperatur ausgehärtet.

Bei der flüssigen Beschichtung der Platten stellt die Bestimmung und Aufrechterhaltung der erforderlichen Auftragsmenge der einzelnen Schichten eine große Herausforderung für die Prozesskontrolle dar. Während der Produktion kann es durch die Schwankung von Produktionsparametern zu unerwünschten Veränderungen im Auftrag kommen. Weiterhin wird die Menge des Auftragsmediums durch die Eigenschaften der Trägerplatte beeinflusst. Die Schwankungen der Temperatur und Viskosität des Auftragsmediums durch die permanente Abnahme und Nachdosierung in den Auftragsbehältern, sowie der Verschleiß der Auftragswalzen können zu einer ungleichmäßigen Auftragsmenge führen. Zudem muss die Überdosierung einzelner Schichten aus technologischen und wirtschaftlichen Gründen vermieden werden, da es sonst zu Haftungsproblemen zwischen den Schichten des Flüssigaufbaus sowie zur Riss- und Bläschenbildung in der Beschichtung und erhöhten Kosten kommen kann. Bei einer Unterdosierung und ungleichmäßigem Auftrag werden die Qualitätskriterien (zum Beispiel das Verhalten der Beschichtung gegenüber Abriebbeanspruchungen, Oberflächenstruktur usw.) nicht erfüllt.

Die Ermittlung der Auftragsmengen des Beschichtungsmateriales kann je nach Produktionstechnologie und -schritt sehr unterschiedliche Fragestellungen beinhalten.

Ein gängiges Verfahren zur Bestimmung von Auftragsmengen ist das Auswiegen. Dabei wird das Trägermaterial mit dem Beschichtungsmedium im Auftragsaggregat beschichtet und anschließend durch Bestimmung der Wiegedifferenz die Auftragsmenge bestimmt. Dieses Verfahren ist aber zeitlich sehr aufwändig und liefert auch nur Einzelwerte, die noch nicht einmal eine Aussage für die gesamte Produktionsbreite zulassen. Sogenannte Wiegebretter sind üblicherweise nur ca. 50x50 cm groß, die Produktionsbreite in einer Beschichtungslinie liegt üblicherweise mindestens bei 1,3 m bzw. meist sogar bei 2,07 m. Um eine Aussage über die gesamte Produktionsbreite machen zu können, müssten mindestens drei Wiegebretter werden. Außerdem liefert dieses Verfahren nur Einzelwerte bei "stehender Anlage", was nicht unbedingt die Verhältnisse in der realen Produktion wiederspiegelt. Bei laufender Anlage ist durch die permanente Abnahme und Nachdosierung in Vorrats- und Auftragsbehälter ein steter Materialfluss gegeben, der die Erwärmung und oder Viskositätsänderungen der Auftragsmedien vermeidet. Diese Mängel des Auswiegens sind umso schwerwiegender, je weniger Material pro m² aufgetragen werden. Selbstverständlich sind auch die Probleme, die ein nicht gleichmäßiger oder nicht den Anforderungen entsprechender Auftrag verursacht, größer.

Da es sich bei den Trägermaterialien im vorliegenden Fall um Holzwerkstoffe handelt, können keine Verfahren eingesetzt werden, die z. B. bei der Imprägnierung von Papieren verwendet werden. Dort kann man bekannte Verfahren (IR-Strahlung) nicht verwenden, da keine Durchstrahlung der Warenbahn möglich ist. Andere Technologien wie Röntgenfluoreszenz setzen erhöhte Sicherheitsstandards bezüglich Strahlenschutz voraus (Strahlenschutzbeauftragter usw.)

WO 2007/021235 A1 beschreibt ein Verfahren zur Herstellung von mehrschichtigen Substraten, wie zum Beispiel mehrschichtigen Holzwerkstoffplatten. Hier wird zunächst ein Härter und anschließend ein Harz auf das Substrat (zum Beispiel Holzwerkstoffplatte) aufgetragen, die anschließend mit einer Schicht wie zum Beispiel einer Papier- oder Textilschicht verpresst werden. Die aufzutragende Menge an Härter wird NIR-Messung durch zwei NIR-Sonden ermittelt. Mit einer ersten NIR-Sonde wird ein erster Datensatz vor dem Auftrag des Härters und mit der zweiten NIR-Sonde wird ein zweiter Datensatz vor dem Verpressen ermittelt, wobei die ermittelten Datensätze zur Steuerung der aufzutragenden Harzmenge verwendet werden. Die Nachteile der Verwendung von zwei Messsonden liegen in den Anschaffungskosten und in dem zusätzlichen Rechenaufwand für die Berechnung der Absorptionswerte von beiden Messköpfen. US 2004/195714 A1 lehrt, wie die Menge einer formaldehydhaltigen Harzschicht auf einer Holzwerkstoffplatte mit einer spektroskopischen Vergleichsmessung ermittelt wird. Das Verfahren umfasst u. a. die Schritte: Auftragen der Harzschicht als Flüssigauftrag auf eine Seite der Holzwerkstoffplatte; Aufnehmen eines NIR-Spektrums der auf der Holzwerkstoffplatte aufgetragenen flüssigen Harzschicht unter Verwendung eines NIR-Detektors in einem Wellenlängenbereich zwischen 500 nm und 2500 nm; Bestimmen der Auftragsmenge der flüssigen Harzschicht durch Vergleich des für die zu vermessende Harzschicht ermittelten NIR-Spektrums mit für Referenzproben mit bekannter Auftragsmenge an flüssiger Harzschicht ermittelten NIR-Spektren unter Verwendung eines Kalibriermodells, welches mittels einer multivariaten Datenanalyse erstellt wird, wobei die für die Referenzproben mit bekannter Auftragsmenge an flüssiger Harzschicht ermittelten NIR-Spektren unter Verwendung eines NIR-Detektors in einem Wellenlängenbereich zwischen 500 nm und 2500 nm vorher bestimmt wurden.

EP 3 026 391 A1 beschreibt ein Verfahren zur Bestimmung der Auftragsmenge einer pigmentierten Grundierungsschicht unter Verwendung von NIR-Spektroskopie. EP 2 915 658 A1 betrifft die Bestimmung des Feuchtegehaltes einer auf einem faserhaltigen Trägermaterial (wie zum Beispiel Dekorpapier) aufgetragenen Harzschicht mittels NIR-Spektroskopie.

Es war nun die technische Aufgabe der vorliegenden Erfindung ein einfaches Verfahren zu finden mit dem die Auftragsmenge einer flüssigen Harzschicht hinreichend genau bestimmt werden kann, so dass Qualitätsmängel, die diesem Parameter zu geordnet werden können, abgestellt werden können. Die Anlagentechnik sollte keine erhöhten Sicherheitsstandards erfordern. Weiterhin sollte die Bestimmung einen möglichst geringen Fehler liefern.

Die gestellte Aufgabe wird erfindungsgemäß durch ein Verfahren mit den Merkmalen des Anspruchs 1 gelöst.

Demnach wird ein Verfahren zur Bestimmung der Menge einer auf einer Holzwerkstoffplatte aufgetragenen flüssigen Harzschicht aus einem formaldehydhaltigen Harz bereitgestellt. Das vorliegende Verfahren umfasst die Schritte:
- Auftragen der Harzschicht als Flüssigauftrag auf mindestens eine Seite der Holzwerkstoffplatte;
- Aufnehmen von einem NIR-Spektrum der auf der Holzwerkstoffplatte aufgetragenen flüssigen Harzschicht unter Verwendung von einem NIR-Detektor in einem Wellenlängenbereich zwischen 500 nm und 2500 nm, bevorzugt zwischen 700 nm und 2000 nm, insbesondere bevorzugt zwischen 900nm und 1700 nm;
- Bestimmen der Auftragsmenge der flüssigen Harzschicht durch Vergleich des für die zu vermessende Auftragsmenge der flüssigen Harzschicht ermittelten NIR-Spektrums mit mindestens einem für Referenzproben mit bekannter Auftragsmenge an flüssiger Harzschicht ermittelten NIR-Spektren unter Verwendung eines Kalibriermodells, welches mittels einer multivariaten Datenanalyse (MDA) erstellt wird,
- wobei die für die Referenzproben mit bekannter Auftragsmenge an flüssiger Harzschichtermittelten NIR-Spektren unter Verwendung des genannten NIR-Detektors in einem Wellenlängenbereich zwischen 500 nm und 2500 nm, bevorzugt zwischen 700 nm und 2000 nm, insbesondere bevorzugt zwischen 900 nm und 1700 nm vorher ermittelt wurde, und
- wobei für die Erstellung des Kalibriermodells die Auswertung auf spektrale Daten aus dem NIR Spektralbereich zwischen 1450 und 1550 nm beschränkt wird, die mittels geeigneter mathematischer Methoden vorbehandelt werden und anschließend der multivariaten Datenanalyse zugeführt werden.

Das vorliegende Verfahren ermöglicht demnach die Bestimmung der Auftragsmenge einer auf eine Holzwerkstoffplatte aufgetragenen flüssigen Harzschicht. Zunächst wird eine NIR-Strahlung erzeugt und auf die zu analysierende Probe geleitet, wo sie mit den Bestandteilen der Probe wechselwirkt und reflektiert oder gestreut wird. Ein NIR-Detektor fängt die reflektierte NIR-Strahlung auf und erzeugt ein NIR-Spektrum, das die chemischen Informationen der Probe beinhaltet. Bei dieser Messung werden in einer Sekunde Dutzende NIR-Messungen durchgeführt, sodass auch eine statistische Absicherung der Werte gewährleistet wird. Die NIR-Spektroskopie zusammen mit der Multivariaten Datenanalyse bietet eine Möglichkeit an, einen direkten Bezug zwischen den spektralen Informationen (NIR-Spektren) und der aufgebrachten Harzmenge herzustellen.

Das vorliegende Verfahren ermöglicht eine zerstörungsfreie kontinuierliche Messung der Auftragsmenge der flüssigen Harzschicht z.B. in einer Fertigungslinie von Holzwerkstoffplatten und eine Echtzeitüberwachung der Auftragsmenge sowie ein automatisch geregeltes System mit Alarmmeldung.

Besonders vorteilhaft ist bei dem vorliegenden Verfahren, dass die Verwendung eines einzelnen NIR-Detektors z.B. eingebaut in einer Fertigungslinie einer Holzwerkstoffplatte ausreichend ist, um die Messung und Auswertung anhand von zur Verfügung stehenden Referenzspektren durchzuführen; d.h. in dem vorliegenden Verfahren ist es nicht erforderlich, zwei NIR-Sonden zur Bestimmung der Auftragsmenge einer Harzmenge zu verwenden.

Wie oben erwähnt, wird zur Bestimmung des Harzgehaltes auf der Platte zunächst ein NIR-Spektrum über den gesamten Spektralbereich aufgenommen, jedoch wird für die Erstellung des Kalibriermodells die Auswertung auf den Spektralbereich zwischen 1450 und 1550 nm beschränkt bzw. eingegrenzt.

Die Bedeutung einer Wellenlänge für die Vorhersage des Harzgehaltes aus dem NIR-Spektrum wird mit Hilfe der Regressionskoeffizienten dargestellt. Dabei haben die Regionen mit großen Koeffizientenbeträgen starken Einfluss auf das Regressionsmodell. So zeigt die Darstellung der Regressionskoeffizienten in einem PLS-Modell für die Bestimmung der Harzmenge bzw. des Harzgehaltes, dass der Wellenlängenbereich zwischen 1460 nm und 1530 mit Maximum bei 1490 nm (Absorptionsbande der Amino-Gruppen des Harzes) für die Berechnung des Modells am wichtigsten ist, da hier die Beträge der Regress. Koeffiz. am größten sind. Die anderen Bereiche im Spektrum haben zwar geringeren Informationsgehalt in Bezug auf die NIR-Messung, tragen aber dazu bei, die weiteren Informationen bzw. störenden Einflussgrößen (wie Transparenz der Schicht, Oberflächenbeschaffenheit der Harzschicht oder des Substrates usw.) zu berücksichtigen bzw. zu minimieren.

Zur Eliminierung von störenden Einflüssen (wie z.B. Beschaffenheit der Oberfläche der Holzwerkstoffplatte, Farbigkeit der Proben, Lichtstreuung an Feststoffpartikeln oder anderen Additiven usw.) ist es notwendig die spektralen Daten mit mathematischen Vorbehandlungsmethoden (z. B. derivative Datenvorbehandlung, Standardisierung gemäß SNV (Standard Normal Variate Transformation), multiplikative Signal-Korrektur (EMSC, Extended Multiplicative Signal Correction) usw.) zu bearbeiten. Dabei werden die Basislinieneffekte, die hauptsächlich durch die unterschiedliche Farbe der Proben verursacht werden, aus den Spektren entfernt, überlagernde Banden voneinander getrennt und die Abhängigkeit der Lichtstreuung an der Substratoberfläche oder an den Feststoffpartikeln in der Beschichtung berücksichtigt. Soll z.B. die Harzauftragsmenge auf unbehandelten Oberflächen von Holzwerkstoffplatten bestimmt werden, erfolgt die Datenvorbehandlung bevorzugt zur Reduzierung der Lichtstreuung an der rauen Oberfläche des Substrates. Bei der Messung auf Dekorschicht liegt der Schwerpunkt der Kalibrierung und Datenvorbehandlung auf der Entfernung der Basislinienverschiebung.

Aus den vorbehandelten Daten wird mit Hilfe der multivariaten Datenanalyse ein Kalibriermodell entwickelt, das alle bei der Kalibrierung verwendeten Dekore beinhaltet.

Entsprechend erfolgen der Vergleich und die Interpretation der NIR-Spektren bevorzugt im Spektralbereich zwischen 1450 und 1550 nm unter Verwendung der multivariaten Datenanalyse MDA. Bei multivariaten Analysemethoden werden typischerweise mehrere statistische Variablen zugleich untersucht. Hierzu wird die in einem Datensatz enthaltene Zahl von Variablen reduziert, ohne gleichzeitig die darin enthaltene Information zu mindern.

Im vorliegenden Fall erfolgt die multivariate Datenanalyse über das Verfahren der Partial Least Squares (PLS) Regression, wodurch ein geeignetes Kalibriermodell erstellt werden kann. Die Auswertung der gewonnenen Daten wird bevorzugt mit einer geeigneten Analysesoftware vorgenommen wie z.B. mit der Analysesoftware SIMCA-P der Firma Umetrics AB.

Es ist bevorzugt, wenn die Referenzprobe mit bekannter Auftragsmenge an flüssiger Harzschicht mindestens eine Holzwerkstoffplatte aufgetragene flüssige Harzschicht umfasst. Die Harzschicht, ggf. weitere Schichten wie Grundierungsschicht und Holzwerkstoffplatte der Referenzprobe sind dabei bevorzugterweise gleichartig zu der zu vermessenden Probe aus Harzschicht, ggf. weiterer Schicht und Holzwerkstoffplatte. Mit anderen Worten, die Harzschicht der Referenzprobe weist die gleiche Zusammensetzung auf, wie die zu vermessende Harzschicht. Dasselbe gilt für die ggf. zum Einsatz kommende weitere Schichten und die Holzwerkstoffplatte.

Die Gleichartigkeit von zu vermessender Probe und Referenzprobe ist insbesondere bei Verwendung von flüssigen Harzschichten mit Zusatzstoffen wie Flammschutzmitteln, Fasern, weiteren Additiven wesentlich. Die Zugabe von Zusatzstoffen zur Harzschicht resultiert typischerweise in zusätzlichen Peaks im NIR-Spektrum und ggf. in einer Verschiebung der Basislinie. Entsprechend ist eine erneute Kalibrierung bzw. die Erstellung eines neuen Kalibriermodells unter Verwendung einer gleichartigen Referenzprobe erforderlich.

In einer Ausführungsform des vorliegenden Verfahrens wird die mindestens eine flüssige Harzschicht auf die Oberfläche einer Holzwerkstoffplatte aufgetragen, die ungeschliffen ist und noch mit einer Presshaut oder Verrottungsschicht versehen ist.

Diese Presshaut entsteht bei der Herstellung der Holzwerkstoffplatten in den Heißpressen durch den direkten Kontakt der beleimten Partikel und Fasern mit den heißen Pressbändern bei kontinuierlichen Pressen. Bei diesem Kontakt vercracken die Holzfasern und der Leim. Die Presshaut oder verrottete Zone hat eine Dicke von etwa 0,2 mm. Diese Presshaut wird beim Beschichten mit Melaminharz imprägnierten Papieren durch den Harzfluss nicht ausreichend verfestigt und führt dann zu einer Schwachzone in der Deckschicht. Diese Schwachzone ist in einem Densogramm der Platte als Rohdichteabfall erkennbar. Dies ist insbesondere bei starker mechanischer Beanspruchung beim Fräsen, wie zum Beispiel bei der Laminatbodenherstellung problematisch. Um diesem Rohdichteabfall vorzubeugen, wird die mit der Presshaut versehene Oberfläche der Trägerplatte geschliffen, wobei üblicherweise ein Abschliff von 0,1-0,3 mm pro Seite erfolgt. Aus diesem Grund müssen die Platten um eine entsprechende Schleifzugabe eine höhere Dicke aufweisen, wodurch die Herstellungskosten negativ beeinflusst werden.

Es hat sich nun gezeigt (siehe EP 3 023 261 A1), dass auf den Schritt des Schleifens der Holzwerkstoffplatte durchaus verzichtet werden kann und das flüssige Harz (auf welches nachfolgend z.B. eine Dekorpapierlage aufgelegt wird) direkt auf die ungeschliffene Oberfläche der Holzwerkstoffplatte aufgebracht werden kann ohne Qualitätseinbußen bei der nachfolgenden Laminatherstellung zu haben.

Das vorliegende Messverfahren ermöglicht nunmehr die Bestimmung des auf solch eine ungeschliffene Holzwerkstoffplatte aufgebrachten flüssigen Harzes. Hierbei kann das flüssige Harz auf die ungeschliffene Unterseite und/oder auf die ungeschliffene Oberseite der Holzwerkstoffplatte aufgetragen sein. Das flüssige Harz kann dabei aufgewalzt, aufgestrichen, aufgespachtelt oder aufgesprüht sein.

In einer Variante des vorliegenden Verfahrens, wird das flüssige Harz in einer Menge zwischen 5 und 100 g/m², bevorzugt zwischen 5 und 50 g/m², insbesondere bevorzugt zwischen 5 und 25 g/m² auf die Oberfläche, insbesondere die ungeschliffene Oberfläche der Holzwerkstoffplatte aufgetragen. Die flüssige Harzschicht kann so dünn aufgetragen sein, dass die flüssige Harzschicht vollständig in die Presshaut einzieht und keine aktive Trocknung der Schicht erfolgen muss. Es ist auch ein Auftrag des flüssigen Harzes in einer Menge von bis zu 300 g/m² denkbar. Die Schicht muss dann aber aktiv auf eine Restfeuchte von 2 bis 15% getrocknet werden, bevor eine weitere Papierlage z.B. eine Dekorpapierlage aufgelegt wird.

In einer anderen Ausführungsform des vorliegenden Verfahrens zur Bestimmung der Auftragsmenge an flüssiger Harzschicht wird die mindestens eine flüssige Harzschicht auf eine Dekorschicht, bevorzugte eine im Direktdruck aufgetragene Dekorschicht oder eine Dekorpapierlage, aufgetragen.

Der Direktdruck von Holzwerkstoffplatten umfasst insbesondere im Tiefdruck- oder Digitaldruck aufgetragene Dekorschichten. Das Tiefdruckverfahren ist eine Drucktechnik, bei der die abzubildenden Elemente als Vertiefungen in einer Druckform z.B. einer Druckwalze vorliegen, die vor dem Druck eingefärbt wird. Der Digitaldruck ermöglicht die Herstellung eines Druckbildes mit besonders hoher Qualität durch eine höhere Auflösung und erlaubt des Weiteren ein breiteres Anwendungsspektrum bei hoher Flexibilität.

Dekorpapiere sind Spezialpapiere zur Oberflächenveredelung von Holzwerkstoffen, die eine hohe Dekorvielfalt ermöglichen. So sind neben den typischen Aufdrucken von diversen Holzstrukturen weitergehende Aufdrucke von geometrischen Formen oder künstlerischen Produkten erhältlich. Eine Einschränkung in der Motivwahl gibt es faktisch nicht. Um eine optimale Bedruckbarkeit zu gewährleisten muss das verwendete Papier eine gute Glätte und Dimensionsstabilität aufweisen und ebenfalls für eine Penetration einer notwendigen Kunstharzimprägnierung geeignet sein.

Im Falle der Bestimmung der Auftragsmenge des flüssigen Harzes auf einer Dekorschicht ist ein zusätzlicher Schritt bei der Erstellung des Kalibriermodells sinnvoll. Entsprechend werden in einer weitergehenden Variante des vorliegenden Verfahrens die für die Erstellung des Kalibriermodells verwendeten spektralen Daten aus dem NIR Spektralbereich zwischen 1450 und 1550 nm nach der Vorbehandlung mit geeigneten mathematischen Methoden in mindestens drei Gruppen aufgeteilt, die jeweils einem Dekor mit einem ähnlichen Farbton entsprechen, und anschließend der multivariaten Datenanalyse zugeführt werden.

Dabei werden die spektralen Daten bevorzugt in eine erste Gruppe für ein Dekor mit hellem Farbton, eine zweite Gruppe mit einem mittleren Farbton und eine dritte Gruppe mit einem dunklen Farbton aufgeteilt.

Demnach wird in dieser Ausführungsform des vorliegenden Verfahrens zusätzlich zur mathematischen Vorbehandlung der NIR-Spektren, die den Dekoreffekt nicht vollständig eliminiert, die Reduzierung des dekorbedingten Effektes durch Aufteilung der Proben in Gruppen mit ähnlicher Dekorfarbe durchgeführt.

Dazu werden alle bei der Kalibrierung verwendeten Dekore in drei Gruppen ihrem Farbton entsprechend aufgeteilt. Die Gruppe 1 beinhaltet helle und die Gruppe 2 mittlere Dekore. In der Gruppe 3 werden Kalibrierproben der dunklen Dekore zusammengefasst. Durch die Aufteilung des gesamten Modells in drei Gruppen-Modelle nach der Farbe der produzierten Dekore wird die systematische (dekorabhängige) Abweichung auf < 5 % reduziert, was zur Steigerung der Genauigkeit der In-Line-Messung führt. Dabei muss nicht jedes an der Anlage produzierte Dekor im *PLS*-Modell erfasst werden. Für die NIR-Messung der Auftragsmenge auf den HDF-Platten mit unterschiedlichen Dekoren ist es ausreichend aus wenigen Vertretern jeder Dekorgruppe ein Regressionsmodell zu entwickeln, das auf die gesamte Gruppe anwendet werden kann.

Die routinemäßige Überwachung der Auftragsmenge der flüssigen Harzschicht (Overlay) an der Fertigungsanlage kann je nach produziertem Dekor mit entsprechendem Gruppen-Modell erfolgen. Dazu werden die gebildeten Gruppen der Dekore um die restlichen Dekore, die bei der Kalibrierung nicht verwendet wurden, bezüglich ihrer Farbgebung erweitert.

Im Falle der Bestimmung der Auftragsmenge einer flüssigen Harzschicht auf einer Dekorschicht wird das flüssige Harz in einer Menge zwischen 50 und 150 g/m², bevorzugt zwischen 60 und 100 g/m², insbesondere bevorzugt zwischen 70 und 90 g/m² aufgetragen. Die zu vermessende flüssige Harzschicht besteht aus einem formaldehydhaltigen Harz, bevorzugt einem Melamin-Formaldehyd-Harz, einem Harnstoff-Formaldehyd-Harz oder Gemischen aus beiden. Der Feststoffgehalt der flüssigen Harzschicht kann zwischen 30 und 80 Gew%, bevorzugt zwischen 50 und 65 Gew% betragen.

Es kann weiterhin vorgesehen sein, dass insbesondere im Falle des Auftrages des flüssigen Harzes auf eine ungeschliffene Oberfläche der Holzwerkstoffplatte eine transparente Harzschicht (d.h. ohne Fest- oder Farbstoffe) aufgetragen wird.

Im Falle der auf eine Dekorschicht aufgetragenen Harzschicht dient diese bevorzugt als Verschleißschutzschicht (sog. Flüssigoverlay). Zu diesem Zwecke weist die flüssige Harzschicht abriebfeste Partikel, natürliche und/oder synthetische Fasern und weitere Additive auf.

Die in der Harzschicht (Flüssigoverlay) verwendeten natürlichen oder synthetischen Fasern sind bevorzugt ausgewählt aus der Gruppe enthaltend Holzfasern, Zellulosefasern, partiell gebleichte Zellulosefasern, Wollfasern, Hanffasern und organische oder anorganische Polymerfasern.

Die abriebfesten Partikel des Flüssigoverlays sind bevorzugt ausgewählt aus der Gruppe enthaltend Aluminiumoxide, Korund, Borcabide, Siliziumdioxyde, Siliziumcarbide und Glaskugeln, wobei Korundpartikel, Glas-/Hohlkugeln bzw. Glaspartikel besonders bevorzugt sind.

Wie bereits oben erwähnt, kann der flüssigen Harzschicht mindestens ein Additiv zugesetzt werden, das ausgewählt sein kann aus der Gruppe enthaltend leitfähige Substanzen, Flammschutzmittel oder lumineszierende Stoffe. Die leitfähigen Substanzen können ausgewählt sein aus der Gruppe enthaltend Ruß, Kohlefasern, Metallpulver und Nanopartikel, insbesondere Kohlenstoffnanoröhren. Es können auch Kombinationen dieser Substanzen zum Einsatz kommen. Als Flammschutzmittel können zum Beispiel Phosphate, Borate, insbesondere Ammoniumpolyphosphat, Tris(tri-Bromneopentyl) phosphat, Zinkborat oder Borsäurekomplexe von mehrwertigen Alkoholen der Harzschicht zugesetzt werden. Die Verwendung von Flammschutzmitteln führt zu einer Verringerung der Entflammbarkeit und ist daher insbesondere bei Laminatböden von Bedeutung, die in geschlossenen Räumen mit besonderen Anforderungen an den Brandschutz oder in Fluchtwegen eingesetzt werden. Aufgrund des Zusatzes an abriebfesten Partikeln, Flammschutzmitteln, Fasern und weiteren Additiven können sich die NIR-Spektren durch zusätzliche Peaks verändern. Es kann auch zu einer Verschiebung der Basislinie der NIR-Spektren kommen, was bei der Erstellung des Kalibriermodells entsprechend berücksichtigt werden muss. Demnach ist es notwendig, bei Verwendung von Zusätzen zur Harzschicht ein Kalibriermodell unter Verwendung einer Referenzprobe zu erstellen, die die gleichen Zusätze in der Harzschicht aufweist.

Generell ist es für die vorliegend beschriebenen Ausführungsformen, insbesondere im Falle des Auftrages der flüssigen Harzschicht auf eine Dekorschicht, möglich und vorstellbar, dass die flüssige Harzschicht aus mindestens einer, bevorzugt mindestens zwei, insbesondere bevorzugt mindestens vier nacheinander aufgetragenen Lagen besteht.

So kann die zu vermessende Harzschicht aus drei Harzlagen bestehen, bzw. drei Harzlagen umfassen, wobei in einer der drei Harzlagen abriebfeste Partikel, zum Beispiel Korundpartikel, enthalten sind, in einer zweiten Harzlage der drei Harzlagen natürliche und/oder synthetische Fasern, wie zum Beispiel Zellulosefasern, enthalten sind und in einer dritten Harzlage der insgesamt drei Harzlagen wiederum abriebfeste Partikel, wie zum Beispiel Glaspartikel, vorhanden sein können. In einer besonders bevorzugten Ausführungsform wird die Lage der Harzschicht enthaltend Korundpartikel auf die Werkstoffplatte als erste Lage aufgetragen, anschließend folgt der Auftrag der die Zellulosefasern enthaltenden zweiten Harzlage und abschließend wird die dritte Harzlage enthaltend Glaspartikel als oberste Lage der Harzschicht aufgebracht. Die erste Harzlage kann 15 bis 25 Gew.%, bevorzugt 20 Gew.% Korundpartikel, die zweite Harzlage 3 bis 7 Gew.%, bevorzugt 5 Gew.% Zellulosefasern und die dritte Harzlage 15 bis 25 Gew.%, bevorzugt 20 Gew.% Glaspartikel enthalten.

Für den beschriebenen Fall, dass die zu vermessende Harzschicht aus mehreren Lagen (Harzlagen) besteht, die in jeweils separaten Verfahrensschritten aufgetragen werden, erfolgt die Bestimmung der Auftragsmenge jeder einzelnen Harzlage jeweils nach Auftragen dieser Harzlage. So kann in einer Variante der Harzschicht mit drei Harzlagen die Auftragsmenge jeweils nach Auftragen der ersten Lage, der zweiten Lage und der dritten Lage durchgeführt werden. Dadurch ist es möglich, die Auftragsmenge der Harzlagen bzw. der finalen Harzschicht bereits während des Herstellungsprozesses in der Fertigungslinie der Werkstoffplatten anzupassen und einzustellen.

Wie erwähnt wird die Auftragsmenge des flüssigen Harzes auf einer Holzwerkstoffplatte bestimmt. Die zum Einsatz kommende Holzwerkstoffplatte kann eine mitteldichte Faser (MDF)-, hochdichte Faser (HDF)- oder Grobspan (OSB)-, eine Sperrholzplatte oder eine Holz-Kunststoff-Platte (WPC) sein.

Das vorliegende Verfahren zur Bestimmung der Auftragsmenge eines flüssigen Harzes auf einer Holzwerkstoffplatte kann zusammenfassend für Holzwerkstoffplatten mit folgendem Aufbau angewendet werden.

In einer ersten bevorzugten Variante wird die flüssige Harzschicht auf eine ungeschliffene Seite (Ober- und/oder Unterseite) einer Holzwerkstoffplatte aus Holzfasern aufgetragen. Auf diese zu vermessende Harzschicht wird anschließend mindestens eine Dekorpapierlage gefolgt von einer Verschleißschutzschicht, bevorzugt als Overlaypapier, aufgelegt. Der gesamte Schichtaufbau wird unter hohem Druck und Temperatur z.B. in einer Kurztaktpresse verpresst.

In einer zweiten bevorzugten Variante wird die flüssige Harzschicht auf eine im Direktdruck aufgetragene Dekorschicht auf einer Holzwerkstoffplatte aufgetragen. In diesem Falle umfasst der Schichtaufbau typsicherweise eine Grundierungsschicht (z.B. aus einem farblosen Harzauftrag und einer weißen Grundierungsschicht) gefolgt von der Dekorschicht und darauf vorgesehene zu vermessende flüssigen Harzschicht als Verschleißschutzschicht (Flüssigoverlay).

Das vorliegende Verfahren zur Bestimmung der Auftragsmenge der flüssigen Harzschicht erfolgt bevorzugt in einer Fertigungslinie von Holzwerkstoffplatten kontinuierlich und online.

Derartige Fertigungslinien von Holzwerkstoffplatten umfassen mindestens eine Auftragsvorrichtung oder Auftragswerk für das flüssige Harz und mindestens einen NIR-Detektor, wobei der mindestens eine NIR-Detektor in Laufrichtung hinter der mindestens einen Auftragsvorrichtung für das flüssige Harz angeordnet ist. So kann die NIR-Messung der Auftragsmenge des flüssigen Harzes direkt an der Produktionslinie hinter dem Auftragswerk mit einem On-Line-Messsystem (zum Beispiel DA 7400 Fa. Perten) erfolgen.

Die zum Einsatz kommenden Auftragsvorrichtungen sind bevorzugterweise Walzen, Sprühvorrichtungen, Gießvorrichtungen und/oder Doppelauftragsvorrichtungen, die ein Auftragen der Harzlagen auf die Oberseite und die Unterseite der Holzwerkstoffplatte ermöglichen.

Es kann auch vorgesehen sein, dass der mindestens eine NIR-Detektor sich quer zur Laufrichtung der mit der flüssigen Harzschicht versehenen Holzwerkstoffplatte bewegt. Entsprechend wird bevorzugt kein stationärer NIR-Detektor verwendet.

Der NIR-Detektor kann an beliebigen Stellen in Transportrichtung der Platte nach den Auftragswerken installiert werden. Dabei kann der Detektor auch über die Plattenbreite traversieren bzw. bestimmte Problembereiche analysieren (z. B. Minderaufträge im Rand- oder Mittelbereich der Platten usw.). Außerdem stehen die Messwerte sofort zur Verfügung und erlauben einen sofortigen Eingriff in den Prozess. Dies ist bei anderen Verfahren nicht ohne weiteres möglich. Die sich aus dem vorliegenden Verfahren ergebenen Vorteile sind eine zerstörungsfreie kontinuierliche Messung der Auftragsmenge des flüssigen Harzes, Echtzeitüberwachung der Auftragsmenge und die Möglichkeit der Implementierung eines automatisch geregelten Systems mit Alarmmeldung.

Die Fertigungslinie kann in einer Ausführungsform eine erste Auftragsvorrichtung zum Auftragen der flüssigen Harzschicht auf die Oberseite und/oder Unterseite der (ungeschliffenen) Holzwerkstoffplatte, eine Vorrichtung zum Auflegen einer Dekorpapierlage, eine zweite Auftragsvorrichtung für eine flüssige Verschleißschutzschicht oder eine Vorrichtung zum Auflegen einer Overlaypapierlage (und ggf. eines Gegenzugpapiers) und eine Kurztaktpresse umfassen. Mindestens ein NIR-Detektor ist in Fertigungsrichtung hinter der ersten Auftragsvorrichtung zum Auftragen der flüssigen Harzschicht angeordnet. Es ist auch möglich, dass ein weiterer NIR-Detektor hinter der zweiten Auftragsvorrichtung für eine flüssige Verschleißschutzschicht vorgesehen ist.

In einer anderen Ausführungsform kann die Fertigungslinie folgende Elemente umfassen:
a) eine erste Auftragsvorrichtung zum Auftragen von mindestens einer Grundierungsschicht auf die Holzwerkstoffplatte, wobei die erste Auftragsvorrichtung mindesten eine, bevorzugt zwei, insbesondere bevorzugt vier Auftragswerke umfasst;
b) eine in einer Verarbeitungsrichtung hinter der ersten Auftragsvorrichtung angeordnete erste Trocknungsvorrichtung (z.B. Konvektionstrockner) zum Trocknen der mindestens einen Grundierungsschicht;
c) eine in Verarbeitungsrichtung hinter der ersten Trocknungsvorrichtung angeordnete zweite Auftragsvorrichtung zum Auftragen von mindestens einer Primerschicht auf die Holzwerkstoffplatte,
d) eine in Verarbeitungsrichtung hinter der zweiten Auftragsvorrichtung angeordnete zweite Trocknungsvorrichtung (z.B. Konvektionstrockner) zum Trocknen der mindestens einen Primerschicht;
e) eine in Verarbeitungsrichtung hinter der zweiten Trocknungsvorrichtung angeordnete dritte Auftragsvorrichtung zum Auftragen von mindestens einer Dekorschicht, wobei die dritte Auftragsvorrichtung mehrere Druckwalzen zum Tiefdruck (z.B. drei oder vier Druckwalzen) umfassen kann;
f) eine in Verarbeitungsrichtung hinter der dritten Auftragsvorrichtung angeordnete vierte Auftragsvorrichtung zum Auftragen von mindestens einer flüssigen Harzschicht als Schutzschicht;
g) einen in Verarbeitungsrichtung hinter der vierten Auftragsvorrichtung angeordneten NIR-Detektor zur Bestimmung der Menge an aufgetragener flüssiger Harzschicht;
h) eine in Verarbeitungsrichtung hinter dem NIR Detektor angeordnete dritte Trocknungsvorrichtung (z.B. Konvektionstrockner) zum Trocknen der mindestens einen flüssigen Harzschicht als Schutzschicht.

Im Anschluss an die letzte Trocknungsvorrichtung kann in Verarbeitungsrichtung eine Kurztaktpresse angeordnet sein, in der der Schichtaufbau unter Druck und Temperatur ausgehärtet werden. Bei diesem Verpressen unter Druck- und Temperatureinfluss schmelzen die Harzschichten wieder auf und der Vernetzungsprozess setzt sich fort. Dadurch ist gewährleistet, dass die einzelnen Harzschichten nicht nur in sich, sondern auch untereinander vernetzt werden und so zu einem Laminat verpresst werden können. Üblicherweise arbeiten Kurztaktpressen beispielsweise bei einem Druck von 30 bis 60 kg/cm² und einer Temperatur von 150 bis 220°C, bevorzugt 200°C. Die Presszeit beträgt typischerweise 5 bis 15 sek, bevorzugt 6 bis 12 sek. In der Kurztaktpresse werden üblicherweise strukturierte Pressbleche verwendet, mittels derer zusätzliche Strukturen in die Harzschichten eingeprägt werden können.

Die Erfindung wird nachfolgend unter Bezugnahme auf die Figuren an mehreren Ausführungsbeispielen näher erläutert. Es zeigen:
- Figur 1: ein Regressionsdiagramm für ein erstes Kalibriermodell, und
- Figur 2: ein Regressionsdiagramm für ein zweites Kalibriermodell.

### Erstellen einer Referenzprobe und Kalibrierung

Die Kalibrierung des NIR-Messsystem für die On-Line-Bestimmung der Auftragsmenge wird wie folgt durchgeführt.

Aus einer HDF-Platte werden mehrere 50 cm x 50 cm Proben angefertigt. Die Rückseite und Kanten der Proben werden mit Aluminiumklebeband versiegelt, um den Feuchteverlust beim Trocknen zu hindern. Eine Probe wird mittels einer Auftragswalze mit einer Harzlösung von oben beschichtet. Die Bestimmung der Auftragsmenge erfolgt durch Auswiegen vor und nach dem Beschichten der Proben. Danach wird die Probe in einem Konvektionstrockner bei 190 °C 15 Sekunden getrocknet und anschließend mit dem NIR-Spektrometer vermessen. Das Vermessen der Kalibrierproben erfolgt mit dem NIR-Messsystem DA 7400. Die Messung wird manuell gestartet und dauert 10 s. Dabei werden die Referenzplatten per Hand kreisförmig unter dem Messkopf bewegt. Durch die Variation der Auftragsmenge wird eine Kalibrierung über einen weiten Bereich der Auftragsmenge von 30 g/m² bis 145 g/m² erreicht. Auf diese Weise werden mehrere Referenzproben vermessen.

Aus den Referenzspektren wird ein Kalibriermodell erstellt, welches zur Bestimmung der Auftragsmenge einer unbekannteren Probe genutzt wird. Die Erstellung des Kalibriermodells erfolgt mittels multivariater Datenanalyse. Dies geschieht mit geeigneten Analysesoftware z. B. mit der Analysesoftware The Unscrambler der Firma CAMO.

Zur Erstellung des Kalibriermodells werden spektrale Daten aus dem NIR Spektralbereich des flüssigen Harzes zwischen 1450 und 1550 nm verwendet, die zunächst mittels geeigneter mathematischer Methoden vorbehandelt werden und anschließend der multivariaten Datenanalyse zugeführt werden.

Das verwendete Software-Programm ermöglicht durch speziellen Vorbehandlungstechniken der spektralen Daten verschiedene Störfaktoren auf die Messung wie Oberflächenbeschaffenheit der Proben, infrarot-inaktive Füllstoffe in der Beschichtung oder unterschiedlichen Farben der Proben und weitere, zu minimieren.

Der Farbeinfluss im Falle der Bestimmung der Flüssigharzmenge auf Dekorschichten auf die NIR-Messung kann zusätzlich durch die Bildung von Dekorgruppen, die eine ähnliche Farbeinteilung aufweisen, gelöst werden. Dazu werden alle bei der Kalibrierung verwendeten Dekore in drei Gruppen ihrem Farbton entsprechend aufgeteilt. Die Gruppe 1 beinhaltet helle und die Gruppe 2 mittlere Dekore. In der Gruppe 3 werden Kalibrierproben der dunklen Dekore zusammengefasst. Durch die Aufteilung des gesamten Modells in drei Gruppen-Modelle nach der Farbe der produzierten Dekore wird die systematische (dekorabhängige) Abweichung auf < 5 % reduziert, was zur Steigerung der Genauigkeit der In-Line-Messung führt. Dabei muss nicht jedes an der Anlage produzierte Dekor im *PLS*-Modell erfasst werden. Für die NIR-Messung der Auftragsmenge auf den HDF-Platten mit unterschiedlichen Dekoren ist es ausreichend aus wenigen Vertretern jeder Dekorgruppe ein Regressionsmodell zu entwickeln, das auf die gesamte Gruppe anwendet werden kann.

### Ausführungsbeispiel A: Bestimmen der Auftragsmenge des flüssigen Harzes auf einer unbehandelten HDF-Platte

Die unbehandelten HDF-Platten werden zuerst mit einer wässrigen Harzlösung in einem Auftragswerk von oben und unten beschichtet. Anschließend werden die beschichteten Platten oben mit Dekor- und Overlaypapier und unten mit Gegenzugpapier belegt. Im weiteren Schritt erfolgt die Aushärtung der Beschichtung in einer Kurztakt-Presse.

Die Menge des aufgetragenen Harzes ist für die Haftung zwischen der Platte und den imprägnierten Papieren entscheidend. Die NIR-Messung erfolgt direkt hinter dem Auftragswerk. Der NIR-Detektor kann auch unten angebracht werden, um die Auftragsmenge an der Unterseite zu messen.

Die Kalibrierung erfolgt durch Aufnahme der NIR-Spektren von mehreren Referenzproben (Wiegeplatten 50 cm x 50 cm) mit bekannter Harzmenge. Dabei werden die Proben mittels einer Auftragswalze mit einer Harzlösung (Auftragsmenge zwischen 5 g/m² und 30 g/m²) von oben (oder unten) beschichtet. Aus den gewonnen Kalibrierspektren wird ein Regressionsmodell erstellt, welches dann für die On-line Messung an der Anlage verwendet wird.

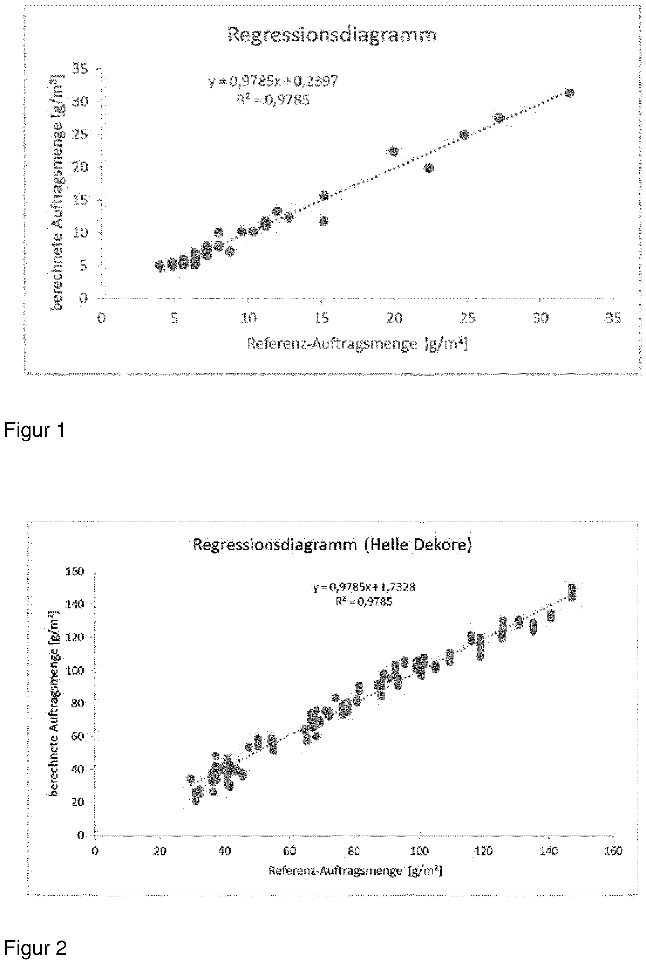

Figur 1 zeigt ein Regressionsdiagramm des für eine unbehandelte HDF-Platte erstellten Kalibriermodells in dem die gemessene Auftragsmenge (Referenz-Auftragsmenge) gegen die von dem Modell berechnete Auftragsmenge aufgetragen wird.

### Ausführungsbeispiel B: Bestimmen der Auftragsmenge des flüssigen Harzes auf einer Dekorschicht

Die Kalibrierung erfolgt durch Aufnahme der NIR-Spektren von mehreren mit unterschiedlichen Dekoren bedruckten Referenzproben (Wiegeplatten 50 cm x 50 cm) mit bekannter Harzmenge. Dabei werden die Proben mittels einer Auftragswalze mit einer Harzlösung (Auftragsmenge zwischen 10 g/m² und 150 g/m²) von oben beschichtet. Aus den gewonnen Kalibrierspektren werden für jede Dekorgruppe ein Regressionsmodell erstellt, welches dann für die On-line Messung an der Anlage verwendet wird.

Figur 2 zeigt ein Regressionsdiagramm des Kalibriermodells für eine Dekorgruppe (helle Dekore) in dem die gemessene Auftragsmenge (Referenz-Auftragsmenge) gegen die von dem Modell berechnete Auftragsmenge aufgetragen wird.

Für die On-Line Messung der Auftragsmenge im Prozess werden Modelle für jede DekorGruppe im NIR-Messsystem installiert.

## Patentansprüche

1. Verfahren zur Bestimmung der Menge einer auf einer Holzwerkstoffplatte aufgetragenen Harzschicht aus einem formaldehydhaltigen Harz,
umfassend die Schritte
- Auftragen der Harzschicht als Flüssigauftrag auf mindestens eine Seite der Holzwerkstoffplatte;
- Aufnehmen eines NIR-Spektrum der auf der Holzwerkstoffplatte aufgetragenen flüssigen Harzschicht unter Verwendung von einem NIR-Detektor in einem Wellenlängenbereich zwischen 500 nm und 2500 nm, bevorzugt zwischen 700 nm und 2000 nm, insbesondere bevorzugt zwischen 900 nm und 1700 nm;
- Bestimmen der Auftragsmenge der flüssigen Harzschicht durch Vergleich des für die zu vermessende Auftragsmenge der flüssigen Harzschicht ermittelten NIR-Spektrums mit für Referenzproben mit bekannter Auftragsmenge an flüssiger Harzschicht ermittelten NIR-Spektren unter Verwendung eines Kalibriermodells, welches mittels einer multivariaten Datenanalyse (MDA) erstellt wird,
- wobei die für die Referenzproben mit bekannter Auftragsmenge an flüssiger Harzschicht ermittelten NIR-Spektren unter Verwendung des genannten NIR-Detektors in einem Wellenlängenbereich zwischen 500 nm und 2500 nm, bevorzugt zwischen 700 nm und 2000 nm, insbesondere bevorzugt zwischen 900 nm und 1700 nm vorher ermittelt wurden,
- wobei für die Erstellung des Kalibriermodells die Auswertung auf spektrale Daten aus dem NIR- Spektralbereich zwischen 1450 und 1550 nm beschränkt wird, die mittels geeigneter mathematischer Methoden vorbehandelt werden und anschließend der multivariaten Datenanalyse zugeführt werden.

2. Verfahren nach Anspruch 1, **dadurch gekennzeichnet, dass** die mindestens eine flüssige Harzschicht auf die Oberfläche einer Holzwerkstoffplatte aufgetragen wird, die ungeschliffen ist und mit einer Presshaut oder Verrottungsschicht versehen ist.

3. Verfahren nach einem der vorhergehenden Ansprüche **dadurch gekennzeichnet, dass** das flüssige Harz in einer Menge zwischen 5 und 100 g/m², bevorzugt zwischen 5 und 50 g/m², insbesondere bevorzugt zwischen 5 und 25 g/m² aufgetragen wird.

4. Verfahren nach Anspruch 1, **dadurch gekennzeichnet, dass** die mindestens eine flüssige Harzschicht auf eine Dekorschicht, bevorzugte eine im Direktdruck aufgetragene Dekorschicht oder eine Dekorpapierlage, aufgetragen wird.

5. Verfahren nach Anspruch 1 oder 4, **dadurch gekennzeichnet, dass** die für die Erstellung des Kalibriermodells verwendeten spektralen Daten aus dem NIR Spektralbereich zwischen 1450 und 1550 nm nach der Vorbehandlung mit geeigneten mathematischen Methoden in mindestens drei Gruppen aufgeteilt werden, die jeweils einem Dekor mit einem ähnlichen Farbton entsprechen, und anschließend der multivariaten Datenanalyse zugeführt werden.

6. Verfahren nach Anspruch 5, **dadurch gekennzeichnet, dass** die spektralen Daten in eine erste Gruppe für ein Dekor mit hellem Farbton, eine zweite Gruppe mit einem mittleren Farbton und eine dritte Gruppe mit einem dunklen Farbton aufgeteilt werden.

7. Verfahren nach einem der 1, 4-6, **dadurch gekennzeichnet, dass** das flüssige Harz in einer Menge zwischen 50 und 150 g/m², bevorzugt zwischen 60 und 100 g/m², insbesondere bevorzugt zwischen 70 und 90 g/m² aufgetragen wird.

8. Verfahren nach einem der vorhergehenden Ansprüche, **dadurch gekennzeichnet, dass** die flüssige Harzschicht aus mindestens einer, bevorzugt mindestens zwei, insbesondere bevorzugt mindestens vier nacheinander aufgetragenen Lagen besteht.

9. Verfahren nach einem der vorhergehenden Ansprüche, **dadurch gekennzeichnet, dass** die flüssige Harzschicht aus einem Melamin-Formaldehyd-Harz, einem Harnstoff-Formaldehyd-Harz oder Gemischen aus beiden, besteht.

10. Verfahren nach einem der vorhergehenden Ansprüche, **dadurch gekennzeichnet, dass** der Feststoffgehalt der flüssigen Harzschicht zwischen 30 und 80 Gew.%, bevorzugt zwischen 50 und 65 Gew.% liegt.

11. Verfahren nach einem der vorhergehenden Ansprüche, **dadurch gekennzeichnet, dass** die flüssige Harzschicht abriebfeste Partikel, natürliche und/oder synthetische Fasern und weitere Additive aufweist.

12. Verfahren nach einem der vorhergehenden Ansprüche, **dadurch gekennzeichnet, dass** die mindestens eine Holzwerkstoffplatte eine mitteldichte Faser (MDF)-, hochdichte Faser (HDF)- oder Grobspan (OSB)-, eine Sperrholzplatte oder eine Holz-KunststoffPlatte (WPC) ist.

13. Verfahren nach einem der vorhergehenden Ansprüche, **dadurch gekennzeichnet, dass** die Bestimmung der Auftragsmenge der flüssigen Harzschicht in einer Fertigungslinie von Holzwerkstoffplatten kontinuierlich und online erfolgt.

14. Verfahren nach einem der vorhergehenden Ansprüche, **dadurch gekennzeichnet, dass** die die Bestimmung der Auftragsmenge der flüssigen Harzschicht in einer Fertigungslinie von Holzwerkstoffplatten erfolgt, wobei der NIR-Detektor hinter mindestens einem Auftragswerk für das flüssige Harz angeordnet ist.

15. Verfahren nach einem der vorhergehenden Ansprüche, **dadurch gekennzeichnet, dass** der NIR-Detektor sich quer zur Laufrichtung der mit der flüssigen Harzschicht versehenen Trägerplatten bewegt.

## Claims

1. Method for determining the amount of a formaldehyde resin layer applied to a wood-based panel,
comprising the steps
- Applying the resin layer as liquid application on at least one side of the wood-based panel;
- Recording an NIR spectrum of the liquid resin layer applied to the wood-based panel using an NIR detector in a wavelength range between 500 nm and 2500 nm, preferably between 700 nm and 2000 nm, in particular preferably between 900 nm and 1700 nm;
- Determining the application amount of the liquid resin layer by comparing the NIR spectrum determined for the application amount of the liquid resin layer to be measured with NIR spectra determined for reference samples with a known application amount of the liquid resin layer, using a calibration model which is established by means of multivariate data analysis (MDA),
- wherein the NIR spectra determined for the reference samples with a known application amount of liquid resin layer were previously determined using said NIR detector in a wavelength range between 500 nm and 2500 nm, preferably between 700 nm and 2000 nm, in particular preferably between 900 nm and 1700 nm,
- wherein the evaluation is restricted to spectral data from the NIR spectral range between 1450 and 1550 nm, which are pretreated by means of suitable mathematical methods and are subsequently fed to the multivariate data analysis.

2. Method according to claim 1, **characterized in that** the at least one liquid resin layer is applied to the surface of a wood-based panel which is unpolished and provided with a pressed skin or rotting layer.

3. Method according to one of the preceding claims, **characterized in that** the liquid resin is applied in an amount between 5 and 100 g/m², preferably between 5 and 50 g/m², in particular preferably between 5 and 25 g/m².

4. Method according to claim 1, **characterized in that** the at least one liquid resin layer is applied to a decorative layer, preferably a decorative layer applied by direct printing or a decorative paper layer.

5. Method according to claim 1 or 4, **characterized in that** the spectral data from the NIR spectral range between 1450 and 1550 nm used for establishing the calibration model are divided, after pretreatment with suitable mathematical methods, into at least three groups, wherein each corresponds to a decor with a similar shade of color, and are subsequently fed to the multivariate data analysis.

6. Method according to claim 5, **characterized in that** the spectral data are divided into a first group for a decoration with a light shade, a second group with a medium shade and a third group with a dark shade.

7. Method according to one of the 1, 4-6, **characterized in that** the liquid resin is applied in an amount between 50 and 150 g/m², preferably between 60 and 100 g/m², in particular preferably between 70 and 90 g/m².

8. Method according to one of the preceding claims, **characterized in that** the liquid resin layer consists of at least one, preferably at least two, preferably at least four successively applied layers.

9. Method according to one of the preceding claims, **characterized in that** the liquid resin layer consists of a melamine-formaldehyde resin, a urea-formaldehyde resin or mixtures of both.

10. Method according to one of the preceding claims, **characterized in that** the solids content of the liquid resin layer is between 30 and 80 % by weight, preferably between 50 and 65 % by weight.

11. Method according to one of the preceding claims, **characterized in that** the liquid resin layer comprises abrasion-resistant particles, natural and/or synthetic fibres and further additives.

12. Method according to one of the preceding claims, **characterized in that** the at least one wood-based panel is a medium density fibre (MDF), high density fibre (HDF) or coarse chip (OSB), a plywood panel or a wood-plastic panel (WPC).

13. Method according to one of the preceding claims, **characterized in that** the determination of the application amount of the liquid resin layer in a production line of wood-based panels takes place continuously and online.

14. Method according to one of the preceding claims, **characterized in that** the determination of the application amount of the liquid resin layer is carried out in a production line of wood-based panels, wherein the at least one NIR detector is arranged behind at least one application device for the liquid resin.

15. Method according to one of the preceding claims, **characterized in that** the at least one NIR detector moves transversely to the running direction of the carrier panel provided with the liquid resin layer.

## Revendications

1. Procédé de détermination de la quantité d'une couche de résine, composée d'une résine contenant du formaldéhyde, appliquée sur une plaque de bois,
comprenant les étapes consistant à
- appliquer la couche de résine en tant que dépôt liquide sur au moins une face de la plaque de bois ;
- enregistrer un spectre NIR de la couche de résine liquide appliquée sur la plaque de bois en utilisant un détecteur NIR dans une plage de longueurs d'ondes comprise entre 500 nm et 2500 nm, de manière préférée entre 700 nm et 2000 nm, de manière particulièrement préférée entre 900 nm et 1700 nm ;
- déterminer la quantité de dépôt de la couche de résine liquide en comparant le spectre NIR défini pour la quantité de dépôt à mesurer de la couche de résine liquide et des spectres NIR définis pour des échantillons de référence avec une quantité de dépôt connue de couche de résine liquide en utilisant un modèle de calibrage, qui est élaboré au moyen d'une analyse de données multivariée (MDA),
- dans lequel les spectres NIR définis pour les échantillons de référence avec une quantité de dépôt connue de couche de résine liquide ont été définis auparavant en utilisant ledit détecteur NIR dans une plage de longueur d'ondes comprise entre 500 nm et 2500 nm, de manière préférée entre 700 nm et 2000 nm, de manière particulièrement préférée entre 900 nm et 1700 nm,
- dans lequel, pour l'élaboration du modèle de calibrage, l'évaluation est limitée à des données spectrales provenant du domaine spectral NIR compris entre 1450 et 1550 nm qui sont prétraitées au moyen de méthodes mathématiques adéquates et ensuite amenées à l'analyse de données multivariée.

2. Procédé selon la revendication 1, **caractérisé en ce que** l'au moins une couche de résine liquide est appliquée sur la surface d'une plaque de bois non polie et pourvue d'une pellicule de pressage ou d'une couche de pourrissement.

3. Procédé selon l'une quelconque des revendications précédentes, **caractérisé en ce que** la résine liquide est appliquée en une quantité comprise entre 5 et 100 g/m², de manière préférée entre 5 et 50 g/m², de manière particulièrement préférée entre 5 et 25 g/m².

4. Procédé selon la revendication 1, **caractérisé en ce que** l'au moins une couche de résine liquide est appliquée sur une couche de décor, de manière préférée sur une couche de décor appliquée en impression directe ou une couche de papier décor.

5. Procédé selon la revendication 1 ou 4, **caractérisé en ce que** les données spectrales utilisées pour l'élaboration du modèle de calibrage, provenant du domaine spectral NIR compris entre 1450 et 1550 nm, sont divisées après le prétraitement avec des méthodes mathématiques appropriées en au moins trois groupes, qui correspondent respectivement à un décor avec une teinte similaire, et sont ensuite amenées à l'analyse de données multivariée.

6. Procédé selon la revendication 5, **caractérisé en ce que** les données spectrales sont divisées en un premier groupe pour un décor avec une teinte claire, un deuxième groupe avec une teinte moyenne et un troisième groupe avec une teinte foncée.

7. Procédé selon l'une quelconque des revendications 1, 4 à 6, **caractérisé en ce que** la résine liquide est appliquée en une quantité comprise entre 50 et 150 g/m², de manière préférée entre 60 et 100 g/m², de manière particulièrement préférée entre 70 et 90 g/m².

8. Procédé selon l'une quelconque des revendications précédentes, **caractérisé en ce que** la couche de résine liquide se compose d'au moins une, de manière préférée d'au moins deux, de manière particulièrement préférée d'au moins quatre, couches appliquées successivement.

9. Procédé selon l'une quelconque des revendications précédentes, **caractérisé en ce que** la couche de résine liquide se compose d'une résine de mélamine-formaldéhyde, d'une résine d'urée-formaldéhyde ou de mélanges des deux.

10. Procédé selon l'une quelconque des revendications précédentes, **caractérisé en ce que** la teneur en matière solide de la couche de résine liquide est comprise entre 30 et 80 % en poids, de manière préférée entre 50 et 65 % en poids.

11. Procédé selon l'une quelconque des revendications précédentes, **caractérisé en ce que** la couche de résine liquide présente des particules résistantes à l'usure, des fibres naturelles et/ou synthétiques et d'autres additifs.

12. Procédé selon l'une quelconque des revendications précédentes, **caractérisé en ce que** l'au moins une plaque de bois est une plaque de fibres moyenne densité (MDF), de fibres haute densité (HDF) ou de gros copeaux (OSB), une plaque de bois contreplaqué ou une plaque de bois-matière plastique (WPC).

13. Procédé selon l'une quelconque des revendications précédentes, **caractérisé en ce que** la détermination de la quantité de dépôt de la couche de résine liquide s'effectue en continu et en ligne dans une ligne de fabrication de plaques de bois.

14. Procédé selon l'une quelconque des revendications précédentes, **caractérisé en ce que** la détermination de la quantité de dépôt de la couche de résine liquide s'effectue dans une ligne de fabrication de plaques de bois, dans lequel le détecteur NIR est disposé à l'arrière d'au moins un dispositif d'enduction pour la résine liquide.

15. Procédé selon l'une quelconque des revendications précédentes, **caractérisé en ce que** le détecteur NIR se déplace transversalement au sens de la marche des plaques supports pourvues de la couche de résine liquide.
